# EUROPÄISCHE PATENTSCHRIFT

(11) **EP 2 167 940 B1**
(45) Veröffentlichungstag und Bekanntmachung des Hinweises auf die Patenterteilung: **23.01.2013**
(21) Anmeldenummer: 08786150.6
(22) Anmeldetag: 15.07.2008
(51) Int. Cl.: G01N 21/64

(54) **VERFAHREN ZUM BESTIMMEN EINES MESSWERTS AUF DER BASIS VON EINZELMOLEKÜLEREIGNISSEN**
METHOD FOR DETERMINING A MEASUREMENT VALUE BASED ON SINGLE MOLECULE EVENTS
PROCÉDÉ DE DÉTERMINATION D'UNE VALEUR MESURÉE SUR LA BASE D'ÉVÉNEMENTS MOLÉCULAIRES INDIVIDUELS

(30) Priorität: 18.07.2007 DE 102007033737
(43) Veröffentlichungstag der Anmeldung: 31.03.2010
(73) Patentinhaber: Max-Planck-Gesellschaft zur Förderung der Wissenschaften e.V., 80539 München (DE)
(72) Erfinder: EGGELING, Christian, 37085 Göttingen (DE); SCHÖNLE, Andreas, 37075 Göttingen (DE); HELL, Stefan, W., 37085 Göttingen (DE); HILBERT, Michael, 22043 Hamburg (DE)
(74) Vertreter: Rehberg Hüppe + Partner
(86) Internationale Anmeldenummer: PCT/EP2008/059222
(87) Internationale Veröffentlichungsnummer: WO 2009/010506

(56) Entgegenhaltungen:
- DE-A1- 19 507 909
- JP-A- 2004 301 520
- US-A1- 2006 038 993
- STEFAN W HELL: "Toward fluorescence nanoscopy" NATURE BIOTECHNOLOGY, NATURE PUBLISHING GROUP, NEW YORK, NY, US, Bd. 21, Nr. 11, 31. Oktober 2003 (2003-10-31), Seiten 1347-1355, XP002458686 ISSN: 1087-0156
- SATOSHI HABUCHI ET AL: "Reversible single-molecule photoswitching in the GFP-like fluorescent protein Dronpa" PROCEEDINGS OF THE NATIONAL ACADEMY OF SCIENCES OF USA, NATIONAL ACADEMY OF SCIENCE, WASHINGTON, DC.; US, Bd. 102, Nr. 27, 5. Juli 2005 (2005-07-05), Seiten 9511-9516, XP002492584 ISSN: 0027-8424
- HAUSTEIN E ET AL: "Single-molecule spectroscopic methods" CURRENT OPINION IN STRUCTURAL BIOLOGY, 21992 1, Bd. 14, Nr. 5, 1. Oktober 2004 (2004-10-01), Seiten 531-540, XP004590063 ISSN: 0959-440X
- LIPPINCOTT-SCHWARTZ J ET AL: "DEVELOPMENT AND USE OF FLUORESCENT PROTEIN MARKERS IN LIVING CELLS" SCIENCE, AMERICAN ASSOCIATION FOR THE ADVANCEMENT OF SCIENCE, US, WASHINGTON, DC, Bd. 300, Nr. 5616, 4. April 2003 (2003-04-04), Seiten 87-91, XP009053701 ISSN: 0036-8075 in der Anmeldung erwähnt
- MOERTELMAIER MANUEL ET AL: "Thinning out clusters while conserving stoichiometry of labeling" APPLIED PHYSICS LETTERS, AIP, AMERICAN INSTITUTE OF PHYSICS, MELVILLE, NY, Bd. 87, Nr. 26, 23. Dezember 2005 (2005-12-23), Seiten 263903-263903, XP012077129 ISSN: 0003-6951 in der Anmeldung erwähnt
- LUKYANOV KONSTANTIN A ET AL: "Photoactivatable fluorescent proteins" NATURE REVIEWS MOLECULAR CELL BIOLOGY, NATURE PUBLISHING, GB, Bd. 6, Nr. 11, 1. November 2005 (2005-11-01), Seiten 885-891, XP009107283 ISSN: 1471-0072 in der Anmeldung erwähnt
- EGGELING C ET AL: "Reversible Photoswitching Enables Single-Molecule Fluorescence Fluctuation Spectroscopy at High Molecular Concentration" MICROSCOPY RESEARCH AND TECHNIQUE, WILEY-LISS, CHICHESTER, GB, Bd. 70, 27. Juli 2007 (2007-07-27), Seiten 1003-1009, XP007905985 ISSN: 1059-910X [gefunden am 2007-07-27]
- BIALKOWSKI S E: "PULSED-LASER EXCITED DIFFERENTIAL PHOTOTHERMAL DEFLECTION SPECTROSCOPY", APPLIED SPECTROSCOPY, THE SOCIETY FOR APPLIED SPECTROSCOPY. BALTIMORE, US LNKD- DOI:10.1366/0003702924123845, vol. 46, no. 9, 1 September 1992 (1992-09-01), pages 1335-1345, XP000296798, ISSN: 0003-7028
- BIALKOWSKI S E: "Progress toward a better understanding of signal generation in laser-excited photothermal spectrometry of homogeneous samples", TRAC, TRENDS IN ANALYTICAL CHEMISTRY, ELSEVIER, AMSTERDAM, NL LNKD- DOI:10.1016/S0165-9936(98)00045-4, vol. 17, no. 8-9, 9 August 1998 (1998-08-09), pages 520-532, XP004146613, ISSN: 0165-9936
- HESS S T ET AL: "Ultra-high resolution imaging by fluorescence photoactivation localization microscopy", BIOPHYSICAL JOURNAL, BIOPHYSICAL SOCIETY, US, vol. 91, no. 11, 1 December 2006 (2006-12-01), pages 4258-4272, XP008082813, ISSN: 0006-3495, DOI: 10.1529/BIOPHYSJ.106.091116
- MICHAEL J RUST ET AL: "Sub-diffraction-limit imaging by stochastic optical reconstruction microscopy (STORM)", NATURE METHODS, NATURE PUBLISHING GROUP, GB, vol. 3, no. 10, 9 August 2006 (2006-08-09) , pages 793-795, XP002492582, ISSN: 1548-7091, DOI: 10.1038/NMETH929 [retrieved on 2006-08-09]
- STEFAN W HELL: "Toward fluorescence nanoscopy", NATURE BIOTECHNOLOGY, NATURE PUBLISHING GROUP, NEW YORK, NY, US, vol. 21, no. 11, 31 October 2003 (2003-10-31), pages 1347-1355, XP002458686, ISSN: 1087-0156, DOI: 10.1038/NBT895

## Beschreibung

### TECHNISCHES GEBIET DER ERFINDUNG

Die Erfindung bezieht sich auf ein Verfahren zum Bestimmen mindestens eines Messwerts durch eine Methode der Fluktuationsanalyse auf der Basis von Einzelmolekülereignissen von gleichartigen Markermolekülen in einer Probe.

Mit Markermolekülen sind hier einerseits Moleküle wie beispielsweise Fluoreszenzfarbstoffe gemeint, mit denen andere Moleküle wie beispielsweise Proteine in einer Zelle oder Partner einer chemischen Reaktion markierbar sind, um die markierten Moleküle mit Messverfahren zu beobachten, bei denen die Markermoleküle und damit die markierten Moleküle nicht jedoch unmarkierte Moleküle sichtbar sind. Mit Markermolekülen sind hier andererseits aber auch beobachtete Moleküle wie beispielsweise fluoreszente Proteine (FP) gemeint, die bereits aufgrund ihrer Struktur eine Markierung in dem voranstehenden Sinne umfassen und deshalb nicht mehr durch ein weiteres Molekül markiert werden müssen. Darüber hinaus sind mit Markermolekülen auch von Markermolekülen eingegangene Komplexe gemeint, wobei das Messsignal von der Art des eingegangenen Komplexes, beispielsweise dem Abstand oder der relativen Orientierung der Konstituenten, abhängen kann. Ein typisches Beispiel wäre die Untersuchung von Bindungsverhalten mittels sogenannter FRET-Paare

Mit einem Messwert auf der Basis von Einzelmotekülereignissen ist ein solcher Messwert gemeint, der auf einer Änderung des Zustands und/oder des Orts einzelner Markermoleküle basiert, wobei sich diese Änderung des Zustands in einer Änderung des Messsignals bemerkbar macht, die häufig diskreter Natur ist. Bei einem Fluoreszenzfarbstoff als Markermolekül ist mit der Änderung des Zustands nicht allein die Anregung des Fluoreszenzfarbstoffs oder dessen Wiederabregung bei der Emission von Fluoreszenzlicht und mit der diskreten Änderung des Fluoreszenzlichts nicht die Aussendung eines einzelnen Photons gemeint. Vielmehr geht es bei einem Fluoreszenzfarbstoff darum, eine Velzahl von Photonen des Fluoreszenzlichts als Messsignal zu empfangen und Änderungen dieses Messsignals zu beobachten.

Dass der mindestens eine Messwert unter bestimmten Bedingungen auf der Basis von Einzelmolekülereignissen nicht bestimmbar ist, bedeutet in dieser Beschreibung, dass er zumindest nicht hinreichend bestimmbar ist. Dies heißt zum Beispiel, dass er unter diesen Bedingungen nur viel schlechter als unter anderen Bedingungen auf der Basis von Einzelmolekülereignissen bestimmbar ist.

### STAND DER TECHNIK

Durch Markieren von interessierenden Molekülen mit einem Fluoreszenzfarbstoff als Markermolekül und Analysieren von Fluoreszenzlicht von dem Fluoreszenzfarbstoff als Messsignal können viele räumliche und temporäre Parameter von Molekülverteilungen bestimmt werden. Fluoreszenzlichtdetektion ist so empfindlich, dass sie selbst die Detektion einzelner Moleküle ermöglicht. Verschiedene erfolgreiche experimentelle Techniken, wie die Fluoreszenz-Korrelations-Spektroskopie (FCS) und die Fluoreszenz-Intentsitäts-Verteilungsanatyse (FIDA) sowie die Multiparameter-Fluoreszenzdetektion (MFD) basieren hierauf. Eine Übersicht über diese Techniken, die als Einzelmolekül-Fluoreszenzspektroskopie bezeichnet werden, gibt C. Eggeling et al.: "Multi-Parameter Fluorescence Detection at the Single-Motecule Level: Techniques and Applications" in 2. BIOSENSOR SYMPOSIUM, Tübingen 2001.

Die Techniken der Einzelmolekül-Fluoreszenzspektroskopie erfordern jedoch, dass einerseits nicht gleichzeitig zu viele und andererseits nicht nur einzelne Moleküle zu dem Messsignal beitragen. Dies ist das gleichbedeutend mit sehr niedrigen Konzentrationen der fluoreszent markierten Moleküle in oder sogar unterhalb des nanomolaren Bereichs. Diese Voraussetzung hat bislang die anderweitig sehr vielversprechende Anwendung auf Systeme ausgeschlossen, in denen höhere molekulare Konzentrationen, beispielsweise im mikromolaren Bereich, erforderlich sind. Weil z. B. Bindungsreaktionen mit geringer Affinität Überschusskonzentrationen der möglichen Bindungspartner bei minimalen Mengen des Bindungsprodukts erfordern und weil enzymatische Reaktionen oft für hohe Substratkonzentration optimiert sind, können auf Einzelmolekülereignissen basierende Experimente wie beispielsweise FCS, FIDA und andere Methoden der Fluoreszenzfluktuationsanalyse in diesen Fällen nicht angewendet werden.

Es sind verschiedene Versuche unternommen worden, diesen Nachteil der Einzelmolekül-Fluoreszenzspektroskopie zu überwinden. Hierzu zählt das Verkleinern des Messbereichs, d. h. im dreidimensionalen Fall des Messvolumens, um die Anzahl der gleichzeitig detektierten fluoreszierenden Markermoleküle auch bei höherer Konzentration klein genug zu halten. Dazu ist der Messbereich sowohl in direktem Kontakt mit der Probe im speziellen durch Nahfeldoptiken (SNOM, TIRF), mechanische Einschränkung des Messvolumens (z. B. durch Wellenleiterstrukturen) als auch rein optisch, beispielsweise durch Kombination mit der STED-Mikroskopie, bis unter die Beugungsgrenze herab eingegrenzt worden. Damit einher geht aber die Einschränkung auf durch das Experiment festgelegte Probengeometrien und/oder eine potentielle Verfälschung des Messwerts. Zudem ist der für die Realisierung dieser Ansätze zu betreibende Aufwand sehr groß.

Ein anderer Ansatz ist es, nur einen Teil der interessierenden Moleküle mit den Markermolekülen zu markieren. Hierbei besteht jedoch die Gefahr, dass sich die markierten Moleküle hinsichtlich des interessierenden Messwerts anders verhalten als die unmarkierten Moleküle, was die Interpretation des Messwerts erschwert. Zudem muss vor dem Markierungsvorgang bekannt sein, welcher Prozentsatz der Moleküle optimalerweise markiert werden soll und wie eine solche Zielvorgabe auch erreicht wird. Im schlimmsten Fall erfordert das viele Iterationen bis der optimale Wert erreicht ist.

Aus J. Lippincott-Schwartz et al.: "Development and Use of Fluorescent Proteinmarkers in Living Cells" in Science, Vol. 300, 4. April 2003, S. 87 ff sind verschiedene Verfahren zum Verfolgen der Diffusion bzw. der Bewegung von mit fluoreszenten Markermolekülen markierten Molekülen bekannt. Bei einem als FRAP (Fluorescence Recovery After Photobleaching) bezeichneten Verfahren wird die Erholung der Fluoreszenz in einem Messbereich einer Probe beobachtet, nachdem die anfänglich in dem Messbereich vorhandenen Markermoleküle vollständig gebleicht wurden. Dieses Verfahren unterscheidet sich von demjenigen nach den Merkmalen des Oberbegriffs des Patentanspruchs 1 dadurch, dass kein auf Einzelmolekülereignissen basierender Messwert sondern der Verlauf der Fluoreszenz in dem betrachteten Messbereich erfasst wird. Bei einem weiteren in diesem Dokument beschriebenen, FLIP (Fluorescence Loss In Photobleaching) genannten Verfahren werden die fluoreszenten Markermoleküle in einer Probe in einem außerhalb des eigentlichen Messbereichs liegenden Bleichbereich gebleicht. Auf die hieraus durch Diffusion der Markermoleküle auch in dem Messbereich resultierende Abnahme der Fluoreszenz wird auf die Diffusion der Markermoleküle bzw. der mit ihnen markierten Moleküle rückgeschlossen. Auch hier basiert der Messwert nicht auf Einzelmolekülereignissen. Dies gilt auch für noch ein weiteres in dem Dokument beschriebenes Verfahren, bei dem Markermoleküle, die anfänglich in einem nicht fluoreszenten Zustand vorliegen, in einem Messbereich mit einem optischen Signal in einen fluoreszenten Zustand überführt werden, und dann beobachtet wird, wie die Fluoreszenz durch Wegdiffundieren der aktivierten Markermoleküle aus dem Messbereich wieder abnimmt. Außerdem wird in dem Dokument beschrieben, dass die Probe in zeitlichen Abständen nach dem lokalen Aktivieren von Markermolekülen in einen fluoreszenten Zustand fluoreszenzlichtmikroskopisch abgebildet werden kann, um die räumliche Ausbreitung der fluoreszenten Markermoleküle, d. h. ihre jeweilige räumliche Verteilung zu erfassen. In dem Dokument wird auch die Fluoreszenzkorrelationsspektroskopie (FCS) als Verfahren zur Lokalisierung und Bestimmung des kinetischen Verhaltens von markierten Proteinen angeführt. Hierbei handelt es sich (s. o.) um ein Verfahren zum Bestimmen von Messwerten auf der Basis von Einzelmolekülereignissen. Eine Anregungen dahingehend, die beschriebenen phototaktivierbaren Proteine auch für FCS-Untersuchungen einzusetzen, enthält das Dokument jedoch nicht.

Die Kinetik schaltbarer fluoreszenter Moleküle wurde in der Vergangenheit häufig mit Methoden der Einzelmolekülspektroskopie untersucht. Allerdings war hier die absolute Konzentration der Moleküle immer von vorneherein so klein, dass die Messwerte unabhängig vom Schaltzustand bestimmbar waren.

Bei einem Verfahren mit den Merkmalen des Oberbegriffs des Patentanspruchs 1, das in M. Moertelmaier et al.: "Thinning out clusters while conserving stoichiometry of labeling" in Applied Physics Letters 87, 263903 (2005) beschrieben ist, wird die Konzentration der aus einem Messbereich Fluoreszenzlicht aussendenden Markermolekülen dadurch reduziert, dass zunächst alle Markermoleküle innerhalb des Messbereichs durch Photobleichen permanent inaktiviert werden, so dass sie überhaupt kein Fluoreszenzlicht mehr aussenden. Die anschließend von außerhalb des Messbereichs in den Messbereich eindiffundierenden, nicht gebleichten Markermoleküle, weisen zumindest anfangs eine gegenüber der absoluten Konzentration der gebleichten und nicht gebleichten Markermoleküle in dem Messbereich soweit reduzierte Messkonzentration auf, dass Einzelfluorszenzmikroskopietechniken angewendet werden können. Eine optimale Messkonzentration für die jeweils angewandte Technik der Einzelmolekülspektroskopie liegt jedoch nur für einen kurzen Zeitraum vor, während die Messkonzentration durch in den Messbereich eindiffundierende fluoreszente Markermoleküle wieder kontinuierlich bis auf die absolute Konzentration der in der jeweiligen Probe insgesamt verbliebenen fluoreszenten Markermoleküle ansteigt. D. h., mit dem bekannten Verfahren ist es nicht möglich, eine für das Bestimmen des jeweils interessierenden Messwerts optimale Messkonzentration der fluoreszierenden Markermoleküle in dem Messbereich dauerhaft einzustellen. Da die Konzentration während der Anstiegsphase ortsabhängig variiert, verkompliziert diese Methode zusätzlich die Datenanalyse. Weil das Photobleichen ein irreversibler Prozess ist, kann mit dieser Methode bei ortsfesten Molekülen nur einmalig und bei langsamer Diffusion nur selten ein kleiner, nicht notwendigerweise repräsentativer Anteil der Markermoleküle gemessen werden.

Eine dauerhaft optimale Messkonzentration kann auch nicht ohne Weiteres dadurch erreicht werden, dass durch Photobleichen eines überwiegenden Anteils aller in der jeweiligen Probe enthaltenen Markermoleküle eine niedrige Messkonzentration der verbleibenden fluoreszenten Markermoleküle eingestellt wird, weil das Photobleichen ein irreversibler Prozess ist und sich die Konzentration der verbleibenden fluoreszierenden Markermoleküle auch noch während des Bestimmens des interessierenden Messwerts durch andere Prozesse verringern und insbesondere die optimale Messkonzentration für die Bestimmung des Messwerts während des Bestimmens des Messwerts verschieben kann. Zudem beschränkt man sich hier sogar bei ausreichend schneller Diffusion auf die einmalige Auswahl eines nicht notwendigerweise repräsentativen Anteils der Markermoleküle.

Aus der WO 2006/127692 A2 ist ein Verfahren zum Bestimmen des Orts einzelner Markermoleküle zwecks Abbilden einer Probe mit hoher Ortsauflösung bekannt. Bei diesem Verfahren wird die Konzentration von Markermolekülen, die sich in einem fluoreszenten Zustand befinden, gegenüber einer absoluten Konzentration der Markermoleküle in dem fluoreszenten und einem nicht fluoreszenten Zustand mit einem optischen Signal auf einen solchen Wert eingestellt, dass die Position einzelner Markermoleküle aufgrund des von ihnen emittierten Fluoreszenzlichts mit über die Beugungsgrenze hinausgehender Ortsauflösung bestimmt werden kann.

Der Einsatz von Fluoreszenzfarbstoffen, die mit einem insbesondere optischen Signal zwischen einem fluoreszenten und einem nicht fluoreszenten Zustand schaltbar sind, zur Erhöhung der Ortsauflösung beim Abbilden einer Probe wurde bereits zuvor in der WO 2004/090617 A2 beschrieben.

In K. A. Lukyanov et al.: "Photoactivatable Fluorescent Proteins" in Nature Reviews, Molecular Cell Biology, Vol. 6, November 2005, S. 885 ff wird eine Übersicht über photoaktivierbare fluoreszente Proteine, die als Markermoleküle eingesetzt werden können, gegeben.

### AUFGABE DER ERFINDUNG

Der Erfindung liegt die Aufgabe zugrunde, ein Verfahren zum Bestimmen mindestens eines Messwerts auf der Basis von Einzelmolekülereignissen von gleichartigen Markermolekülen in einer Probe aufzuzeigen, bei dem trotz einer für ein derartiges Bestimmen an sich zu hohen absoluten Konzentration der Markermoleküle in der Probe dennoch optimale Voraussetzungen für das Bestimmen des Messwerts bereitgestellt werden können ohne die oben beschriebenen Nachteile in Kauf nehmen zu müssen.

### LÖSUNG

Die Aufgabe der Erfindung wird durch ein Verfahren mit den Merkmalen des Patentanspruchs 1 gelöst. Bevorzugte Ausführungsformen des neuen Verfahrens sind in den abhängigen Patentansprüchen 2 bis 12 beschrieben.

### BESCHREIBUNG DER ERFINDUNG

Bei dem neuen Verfahren werden die Markermoleküle mit einem Einstellsignal entweder zu einem im Vergleich zu ihrer absoluten Konzentration kleineren Anteil aus ihrem nicht messbaren Zustand in ihren messbaren Zustand überführt, in dem sie dann mit der gewünschten Messkonzentration vorliegen, oder sie werden aus ihrem messbaren Zustand soweit in ihren nicht messbaren Zustand überführt, bis sie nur noch mit ihrer gewünschten Messkonzentration in dem messbaren Zustand zurückbleiben. Dabei geht es in dem zweiten Fall der Erfindung aber nicht um ein Bleichen oder einen anderen endgültigen Ausschaltprozess der Markermoleküle. Vielmehr werden in diesem zweiten Fall die Markermoleküle aus einer Gruppe von Markermolekülen ausgewählt, die mit einer gewissen Übergangsrate aus ihrem nicht messbaren in ihren messbaren Zustand übergehen. Die Messkonzentration ergibt sich dann über ein dynamisches Gleichgewicht. In beiden Fällen kann die Messkonzentration der Markermoleküle zumindest in der Weise nachgeregelt werden, dass im ersten Fall durch Erhöhen des Einstellsignals, mit dem die Markermoleküle überführt werden, weitere Markermoleküle aus ihrem nicht messbaren Zustand in ihren messbaren Zustand überführt werden bzw. im zweiten Fall durch Reduzieren des Einstellsignals die Übergangsrate der Markermoleküle aus ihrem nicht messbaren in ihren messbaren Zustand genutzt wird, um die Anzahl der in dem messbaren Zustand befindlichen Markermoleküle anwachsen zu lassen. Umgekehrt ist im zweiten Fall eine Reduzierung der Messkonzentration durch Erhöhung des Einstellsignals möglich. Im ersten Fall ist gewöhnlich ein permanentes Einstellsignal erforderlich, da zum Beispiel Markermoleküle das Messvolumen verlassen oder aus ihrem messbaren in den nicht messbaren oder zum Beispiel durch Bleichen in einen anderen, dauerhaften, nicht messbaren Zustand übergehen. Dies kann entweder spontan oder durch ein weiters Signal passieren. In jedem Falle kann dann durch eine Reduktion des Einstellsignals der Anteil der Markermoleküle im Messvolumen, die sich in einem messbaren Zustand befinden, reduziert werden.

Damit kann, was besonders bevorzugt ist, die Messkonzentration in beiden Fällen des erfindungsgemäßen Verfahrens anhand des aus dem Messbereich erfassten Messsignals auf einen für das Bestimmen des mindestens einen Messwerts optimalen Konzentrationswert in dem definierten Messbereich eingeregelt werden. Der optimale Konzentrationswert kann sich beispielsweise durch ein maximales Signal zu Rauschen-Verhältnis oder die schnellstmögliche Bestimmung des Messwertes mit einer gegebenen Genauigkeit auszeichnen.

Bei dem neuen Verfahren ist es auch möglich, sich ändernde Messbedingungen oder sich im oben erläuterten Sinne ändernde optimale Konzentrationswerte der Messkonzentration zu berücksichtigen, indem die Messkonzentration anhand des aus dem Messbereich erfassten Messsignals fortlaufend, d. h. dynamisch, nachgeregelt wird.

Wie bereits anhand der bei der Erfindung gegebenen Einflussmöglichkeiten auf die Messkonzentration angedeutet wurde, kann zum Einregeln der Messkonzentration das Einstellsignal verwendet werden. Es kann aber auch ein weiteres Signal variabel eingesetzt werden, mit dem die Markermoleküle entgegen der Hauptrichtung ihrer Überführung mit dem Einstellsignal zurück in ihren anfänglichen Zustand oder in einen weiteren nicht messbaren Zustand überführt werden.

In dem zweiten Fall der Erfindung, in dem die Markermoleküle aus einer Gruppe von Markermolekülen ausgewählt werden, die mit einer Übergangsrate aus ihrem nicht messbaren in ihren messbaren Zustand übergehen, kann diese Übergangsrate spontan, d.h. eine thermisch induzierte, Übergangsrate sein. Es kann sich aber auch um eine durch ein anderes Signal induzierte Übergangsrate handeln. Konkret kann dazu ein nur diese Übergangsrate beeinflussendes zusätzliches Signal eingesetzt werden. Häufig wird diese Übergangsrate, soweit sie nicht spontan ist, bei dem neuen Verfahren jedoch durch ein zum Bestimmen des mindestens einen Messwerts eingesetztes Signal induziert. Hierbei handelt es sich beispielsweise um Anregungslicht zum Anregen von Fluoreszenzlicht als Messsignal von den Markermolekülen.

Weil bei dem neuen Verfahren ein Messwert bestimmt wird, der einen anderen Parameter als den Ort oder die Orientierung der Markermoleküle in dem Messbereich betrifft, wird das neue Verfahren so durchgeführt, dass beim Bestimmen des mindestens einen Messwerts das Messsignal von den Markermolekülen unabhängig davon ausgewertet wird, von wo innerhalb des Messbereichs es stammt oder welcher Orientierung der Markermoleküle in dem Messbereich es entspricht.

Konkret wird der Messbereich auf einen den Messbereich nicht räumlich auflösenden Detektor für das Messsignal abgebildet.

Der Messwert auf der Basis von Einzelmolekülereignissen wird bei dem neuen Verfahren durch eine Methode der Fluktuationsanalyse bestimmt. Insbesondere ist das neue Verfahren zur Anwendung bei Methoden der Fluktuationsanalyse wie zum Beispiel FCS und FIDA und bei verschiedenen Spielarten der MFD geeignet.

Wie sich bereits anhand der mehrfachen Verweise auf Fluoreszenzlicht von den Markermolekülen andeutete, betrifft die Erfindung fluoreszente Markermoleküle, wobei das Messsignal von den Markermolekülen emittiertes Fluoreszenzlicht ist.

Zu den Messwerten, die gemäß dem erfindungsgemäßen Verfahren bestimmt werden können, zählen insbesondere die Folgenden:
- Eine Lebensdauer eines Zustands der Markermoleküle. Hierbei kann es sich um einen angeregten Zustand der Markermoleküle handeln. Dieser angeregte Zustand kann, muss aber nicht ein fluoreszenter Zustand sein, aus dem die Markermoleküle unter Aussendung des als Messsignal verwendeten Fluoreszenzlichts in einen anderen Zustand übergehen.
- Eine Übergangswahrscheinlichkeit und/oder eine Übergangsrate der Markermoleküle in einen Zustand.
- Eine Variation eins Absorptions- oder Emissionsspektrums bei den Markermolekülen. Derartige Variationen können z. B. auf Änderungen der chemischen oder physikalischen Umgebungen der Markermoleküle oder auf eine eingegangene Bindung oder Änderung der Konformation hinweisen.
- Ein Verhältnis zwischen Signalstärken des Messsignals bei mehreren Fluoreszenzlichtwellenlängen der Markermoleküle oder -molekülkomplexe. Dadurch kann z. B. eine Änderung des Emissionsspektrums oder auch der Abstand oder Bindungszustand zweier oder mehrerer Moleküle, zwischen denen es zu Energietransfer, zum Beispiel durch FRET, kommt, bestimmt werden.
- Eine Signalstärke oder Helligkeit der Markermoleküle, die ebenfalls einen Hinweis auf unterschiedliche chemische oder physikalische Umgebungen der Markermoleküle sein kann und beispielsweise anzeigt, ob bestimmte Markermoleküle leichter (als andere) auf anderem Weg als durch die Aussendung von Fluoreszenzlicht aus ihrem fluoreszenten Zustand herausgelangen können.
- Ein Zeitverlauf eines Messsignals von den Markermolekülen, womit insbesondere ganz allgemein Messwerte im Bereich der Fluktuationsanalyse gemeint sind.
- Eine Aufenthaltsdauer der Markermoleküle in dem Messbereich, die einen speziellen Messwert bei Fluktuationsanalyse darstellt und z. B. als Maß für die Diffusions- oder Flussgeschwindigkeiten in der Probe verwendet werden kann.
- Eine Aufenthaltshäufigkeit der Markermoleküle, insbesondere verglichen mit einer Aufenthaltshäufigkeit anderer Markermoleküle in dem Messbereich. Das neue Verfahren ist, obwohl es sich auf das Bestimmen eines Messwerts zu gleichartigen Markermolekülen bezieht, nicht dahingehend eingeschränkt, dass nicht auch Messwerte zu anderen Markermolekülen in demselben Messbereich bestimmt werden können. Insbesondere eignet es sich zur präzisen Bestimmung relativer Konzentrationen innerhalb des Messbereichs.
- Eine Aufteilung der Markermoleküle auf mehrere anhand des Messsignals unterscheidbare Unterzustände ihres messbaren Zustands, wobei die Unterzustände das in dem messbaren Zustand von den Markermolekülen erhältliche Messsignal variieren.

Bei dem neuen Verfahren können die Markermoleküle in der Probe beweglich sein, wie dies dem Prinzip der Fluktuationsanalyse entspricht, wobei der Messbereich relativ zu der Probe festliegt.

Umgekehrt kann aber auch der Messbereich relativ zu der Probe bewegt werden, um insbesondere bei in der Probe fixierten Markermolekülen der Fluktuationsanalyse ähnliche Methoden zum Bestimmen von Messwerten anwenden zu können, oder Messwerte in verschiedenen Bereichen der Probe zu erhalten.

Bei dem erfindungsgemäßen Verfahren zum Bestimmen von Messwerten auf der Basis von Einzelmolekülereignissen stammt das Messsignal von einem Kollektiv von Markermolekülen, das sogar eine gewisse Größe aufweisen muss, um optimale Bedingungen für das Bestimmen des Interessierenden Messwerts bereitzustellen. Dazu wird bei dem neuen Verfahren die Messkonzentration auf einen Wert eingestellt, der mindestens zweimal so groß ist wie der Kehrwert der Abmessungen des Messbereichs, der bei dem neuen Verfahren in der Regel räumlich nicht oder nur durch die endliche Größe des Messbereichs aufgelöst wird. Vorzugsweise wird die Messkonzentration sogar auf einen Wert eingestellt, der mindestens fünfmal so groß ist, wie der Kehrwert der Abmessungen des Messbereichs.

Wie schon im Zusammenhang mit den Möglichkeiten, die Messkonzentration auf einen optimalen Konzentrationswert einzustellen, angedeutet wurde, kann neben dem Einstellsignal ein Rückführsignal eingesetzt werden, das sich von dem Einstellsignal unterscheidet und mit dem die Markermoleküle entgegen der Hauptrichtung ihrer Überführung mit dem Einstellsignal zurück in ihren anfänglichen Zustand überführt werden. Die Messkonzentration wird dann dynamisch durch das Verhältnis der Intensitäten des Einstellsignals und des Rückführsignals eingestellt. Auch wenn dabei die Messkonzentration konstant gehalten wird, zählen zu ihr immer andere Markermoleküle. Dies ist ein grundsätzlicher Unterschied zu Verfahren, bei denen der Hauptanteil der Markermoleküle irreversibel gebleicht wird, um die Messung zu ermöglichen. Bei vielen erfindungsgemäßen Messmethoden ist darüber hinaus eine direkte Zuordnung des Messsignals zu bestimmten Markermolekülen, die bei dem in der WO 2006/127692 A2 beschriebenen Verfahren von entscheidender Bedeutung ist, nicht erforderlich.

Bereits im Zusammenhang mit der Möglichkeit des Einregelns der Messkonzentration wurde ein Ausschaltsignal angedeutet, mit dem die Markermoleküle aus ihrem messbaren Zustand in einen weiteren, permanent nicht messbaren Zustand überführt werden können. Dieses Ausschaltsignal kann im Rahmen des natürlichen Bleichens von Markermolekülen auch durch ein Abfragesignal, d. h. z. B. durch Anregungslicht für fluoreszente Markermoleküle bereitgestellt werden.

Das Einstellsignal und/oder das Rückführsignal und/oder das Ausschaltsignal ist ein optisches Signal. Mit einem optischen Signal ist jedwedes elektromagnetische Signal gemeint. Ein thermisches Signal kann bereits durch die tatsächliche Temperatur der Probe bereitgestellt werden.

Weder das Einstellsignal noch ggf. das Rückführsignal oder das Ausschaltsignal ist ein Signal, das die räumliche Verteilung der Markermoleküle ändert, um die gewünschte Messkonzentration einzustellen. Vielmehr werden die ihre Lage in der Probe beibehaltenden Markermoleküle durch jedes dieser Signale zwischen verschiedenen Zuständen überführt.

Die erwähnten einzelnen Signale, zu denen neben dem Einstellsignal, dem Rückführsignal und dem Ausschaltsignal auch ein Abfragesignal gehört, mit dem die Markermoleküle zur Abgabe des Messsignals angeregt werden, können paarweise oder sogar zu dritt durch dasselbe physikalische Signal bereitgestellt werden. So kann das Einstellsignal, das einen Teil der Markermoleküle aus einem nicht fluoreszenten in einen fluoreszenten Zustand überführt, gleichzeitig das Abfragesignal, d. h. ein Anregungssignal zum Anregen der Markermoleküle zur Emission von Fluoreszenzlicht sein und als Ausschaltsignal wirken, indem es die Markermoleküle letztlich in einen weiteren permanent nicht messbaren Zustand bleicht. Auch das Abfragesignal und das Rückführsignal können ein und dasselbe Signal sein.

Es kann von Vorteil sein, mindestens ein Signal aus der Gruppe des Einstellsignals, des Rückführsignals, des Ausschaltsignals und des Abfragesignals mit einer Modulation über die Zeit auf die Probe aufzubringen. Ein solches Vorgehen dient zum Beispiel dazu, die Empfindlichkeit des neuen Verfahrens beim Bestimmen des interessierenden Messwerts durch Ausnutzung einer zeitlichen Korrelation zwischen dem Messsignal und dem Abfragesignal zu erhöhen. Eine zeitliche Variation des Einstellsignals und anderer Signale, die die Messkonzentration beeinflussen, kann aber auch zur Einstellung des optimalen Konzentrationswerts für die Messkonzentration genutzt werden, indem dabei die Einflüsse auf den Messwert beobachtet werden. Häufig wird mit der zeitlichen Variation der jeweiligen Signale aber vorwiegend der Zweck der Diskriminierung der anderen Signale von dem interessierenden Messsignal an einem Detektor verfolgt.

Insbesondere das Einstellsignal, aber auch jedes andere Signal aus der Gruppe des Einstellsignals, des Rückführsignals, des Ausschaltsignals und des Abfragesignals kann zudem mit einer strukturierten räumlichen Verteilung auf die Probe aufgebracht werden. Mit der strukturierten räumlichen Verteilung des Einstellsignals kann beispielsweise der Messbereich definiert werden, indem nur in diesem Messbereich überhaupt ein Konzentrationswert der Markermoleküle in dem messbaren Zustand eingestellt wird. Der Messbereich kann aber auch durch das Abfragesignal, das Rückführsignal oder den Detektor für die Detektion des Messsignals festgelegt werden.

In diesem Zusammenhang kann es von besonderem Vorteil sein, eines der eingesetzten Signale in Form einer Zwei- oder Mehr-Photonen-Wechselwirkung aufzubringen.

Eine weitere Möglichkeit einer räumlichen Strukturierung insbesondere des Einstellsignals, aber auch des Rückführ- oder Ausschaltsignals, kann darin bestehen, dass es außerhalb des Messbereichs auf die Probe aufgebracht wird, so dass nur die durch den Bereich dieses Signals in den Messbereich diffundierenden Markermoleküle von dem Signal beeinflusst sind. So kann ein Ring oder eine Schale aus dem Einstellsignal um den Messbereich gelegt werden. Wenn das Einstellsignal hingegen innerhalb des Messbereichs auf die Probe aufgebracht wird, kann es bevorzugt sein, wenn es über dem Messbereich eine konstante Intensität aufweist, um nicht die Interpretation des gewonnenen Messwerts zu erschweren.

Zur Erhöhung der Messgeschwindigkeit können die Markermoleküle bei dem neuen Verfahren in mehreren getrennten Messbereichen in der Probe parallel gemessen werden. Hierzu kann ein die verschiedenen Messbereiche räumlich auflösender Detektor für die Detektion des Messsignals eingesetzt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Figuren näher erläutert und beschrieben.
- **Fig. 1**: zeigt einen prinzipiellen Aufbau einer Vorrichtung zur Durchführung einer Ausführungsform des erfindungsgemäßen Verfahrens.
- **Fig. 2**: zeigt die Funktionsweise des erfindungsgemäßen Verfahrens in einem ersten Fall, in dem mit einem Einstellsignal von einer Vielzahl von Markermolekülen nur wenige aus einem nicht messbaren Zustand in einen messbaren Zustand überführt werden.
- **Fig. 3**: zeigt einen gegenüber Fig. 2 umgekehrten Fall, in dem mit einem Einstellsignal eine Vielzahl von Markermolekülen bis auf wenige aus einem messbaren Zustand in einen nicht messbaren Zustand überführt wird.
- **Fig.4**: illustriert die Abhängigkeit der relativen Anzahl von Markermolekülen im fluoreszierenden Zustand von dem Einstellsignal für verschiedene schaltbare Fluoreszenzfarbstoffe als Markermoleküle gemäß dem in Fig. 2 skizzierten Fall.
- **Fig. 5**: skizziert verschiedene räumliche Lagen des Einstellsignals gegenüber einem Messbereich, aus dem ein Messsignal empfangen wird, bei dem erfindungsgemäßen Verfahren; und
- **Fig. 6**: dokumentiert eine Anwendung des erfindungsgemäßen Verfahrens, bei der die Anzahl von Markermolekülen Rhodamin 110 (Rh110) in nanomolarer Konzentration trotz eines großen Überschusses an anderen Markertnolekülen dronpa-M159S mit Hilfe der Fluoreszenzfluktuationsspektroskopie bestimmt wurde, obwohl sich die Messsignale von dronpa-M159S und Rh110 beispielsweise durch Farbfilter nicht trennen lassen.

### FIGURENBESCHREIBUNG

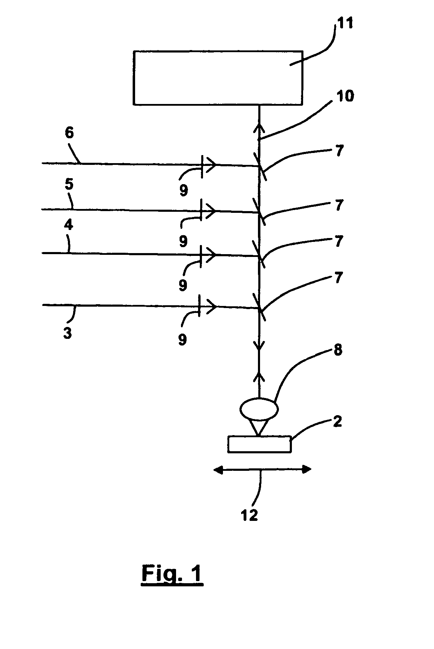

Die in **Fig. 1** dargestellte Vorrichtung 1 entspricht bis auf die Vielzahl der auf eine Probe 2 aufbringbaren Signale 3 bis 6 einer Vorrichtung, wie sie typischerweise auch für herkömmliche Fluktuationsanalysen eingesetzt wird. Hier nicht einzeln hervorgehobene Markermoleküle in der Probe 2 werden in dem Fokalbereich eines Objektivs 8 mit einem Abfragesignal 3 beleuchtet. Durch dasselbe Objektiv 8 gelangt in Gegenrichtung ein Messsignal 10 von den Markermolekülen auf einen Detektor 11. Bei dem Messsignal handelt es sich in vielen Fällen um Fluoreszenzlicht, das von Markermolekülen im Fokus des Objektivs 8 aufgrund einer Anregung durch das Abfragesignal 3 emittiert wird. Mit Hilfe einer konfokalen Anordnung des Detektors 11 oder einer davor angeordneten Blende oder durch die Abmessungen eines Probenbehälters wird der Messbereich, aus dem das Messsignal 10 registriert wird, auf einen kleinen räumlichen Bereich, typischerweise ein sogenanntes "beugungsbegrenztes" Detektionsvolumen eingeschränkt. Um die Konzentration der Markermoleküle, von denen das Messsignal 10 erhalten wird, auf eine Messkonzentration zu begrenzen, die kleiner als die absolute Konzentration der Markermoleküle ist und eine Bestimmung von Messwerten auf der Basis von Einzelmolekülereignissen erlaubt, sind die weiteren Signale 4 bis 6 vorgesehen. Ein Einstellsignal 4 schaltet die Markermoleküle hier aus einem nicht fluoreszenten, d. h. nicht messbaren, Zustand in einen fluoreszenten, d. h. messbaren, Zustand. Im Gegenzug dazu schaltet ein Rückführsignal 5 die Markermoleküle in ihren anfänglichen Zustand zurück; und ein Ausschaltsignal 6 dient dazu, die Markermoleküle in einen weiteren Zustand zu überführen, in dem sie permanent nicht mehr fluoreszent, d. h. nicht mehr messbar, sind. Die Strahlengänge der Signale 3 bis 6 und des Messsignals 10 werden durch optische Bauteile 7, bei denen es sich zum Beispiel um dichroitische Spiegel handeln kann zusammengeführt bzw. getrennt. Zusätzlich können in jeden Strahlengang zum Beispiel Phasenplatten 9 eingebracht werden, um das jeweilige Signal in der Probe räumlich zu modulieren. Mit Hilfe einer durch einen Doppelpfeil angedeuteten Scaneinrichtung 12 erfolgt eine Relatiwerschiebung der Probe 2 gegenüber dem Objektiv 8, um die Probe 2 mit dem Messbereich abzutasten. Alternativ kann natürlich auch in die Strahlengänge eine Scaneinrichtung eingebracht werden, die den Messbereich relativ zum Objektiv 8 und der Probe 2 verschiebt. Um mit dem Detektor 11 tatsächlich nur das interessierende Messsignal 10 zu registrieren, kann dieser neben seiner konfokalen Anordnung zeitaufgelöst betrieben werden, so dass er z. B. das durch einen Puls des Abfragesignals 3 ausgelöste Fluoreszenzlicht in Form des Messsignals 10 empfängt, nicht aber Reflektionen des Abfragesignals 3 und auch keine reflektierten Anteile der ebenfalls gepulsten weiteren Signale 4 bis 6. Das Einstellsignal 4, das Ausschaltsignal 6, das Abfragesignal 3 und das Rückführsignal 5 können entweder gleichzeitig oder in beliebiger Reihenfolge und dabei auch überlappend eingestrahlt werden. Insbesondere kann das Messsignal oder die Messsignale auch durch geeignete Farbfilter selektiert werden.

Konkret kann das Abfragesignal 3 ganz oder teilweise auch die Funktion des Einstellsignals 4 oder des Rückführsignals 5 übernehmen, indem es nicht nur das Messsignal 10 hervorruft, sondern auch die Markermoleküle in der einen oder anderen Richtung zwischen ihrem messbaren Zustand und ihrem nicht messbaren Zustand überführt. In diesem Fall kann dann, wenn die Überführungsrate aufgrund des Abfragesignals 3 für die Einstellung der gewünschten Messkonzentration der Markermoleküle in dem Messbereich ausreichend ist, auf ein zusätzliches Einstellsignal 4, Rückführsignal 5 oder Ausschaltsignal 6 verzichtet werden. In einfachsten Fall ist nur ein Abfragesignal 3 notwendig, das alle Funktionen übernimmt. Vielfach wird neben dem Abfragesignal 3 aber mindestens ein weiteres Signal benötigt, das eine andere Wellenlänge als das Abfragesignal 3 aufweist. Es können auch alle Signale unterschiedlich sein.

Mit der in Fig. 1 gezeigten Vorrichtung können reaktionskinetische Konstanten, interne Über gangsraten, Diffusions- und Flussgeschwindigkeiten, Bindungsaffinitäten und die statistischen Verteilungsfunktionen von Lebensdauer, Helligkeiten und anderen Molekülparametern mittels des Messsignals 10 auf der Basis von Einzelmolekülereignissen gemessen werden. Kombiniert man die Anordnung mit mehreren Detektionskanälen des Detektors 11, z. B. für unterschiedliche spektrale Bereiche des als Messsignal 10 detektierten Lichts, können zusätzlich z. B. auch FRET-Effizienzen gemessen werden.

Die angedeutete Scaneinrichtung 12 erlaubt es auch, Fluktuationsmessungen an ruhenden Proben 2, d. h. an Proben 2 mit ortsfesten Markermolekülen durchzuführen oder Unterschiede des Messignals 10 aus verschiedenen Bereichen der Probe 2 zu erfassen. Die Vorrichtung 1 kann auch so erweitert werden, dass die Markermoleküle in mehreren Messbereichten parallel, d. h. gleichzeitig gemessen werden. Hierzu können mehrere separate Detektoren 11 oder ein räumlich unterteilter Detektor mit einzelnen getrennten Detektionsbereichen für die unterschiedlichen Messbereiche eingesetzt werden. Der Aufbau der Vorrichtung 1 kann dann einer speziellen Ausführungsform eines so genannten Video-Mikroskops entsprechen. Entscheidend ist jedoch, dass die Zeitauflösung des Detektors ausreicht, um die gewünschte Methode der Parameterbestimmung auch anwenden zu können. Hierfür kommen beim gegenwärtigen Stand der Technik insbesondere so genannte EMCCD- und CMOS-Kameras, letztere in der Regel kombiniert mit einem Bildverstärker, in Frage.

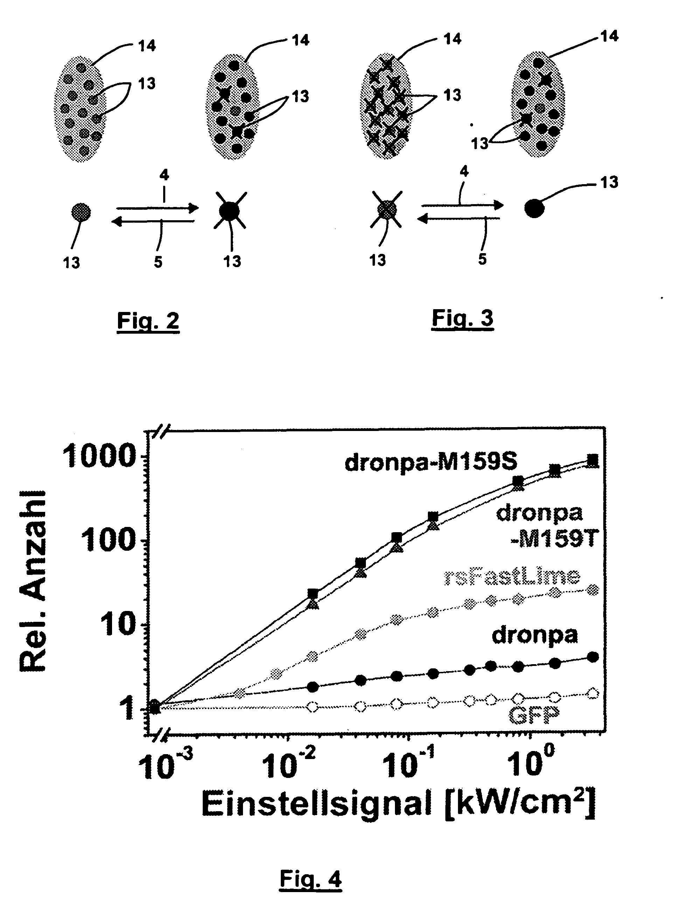

**Fig. 2** skizziert die Wirkung des Einstellsignals 4 auf Markermoleküle 13 in einem Messbereich 14. Die Markermoleküle sind in der linken Hälfte von Fig. 2 sämtlich in einem nicht messbaren Zustand, in dem sie auf das Abfragesignal 3 gemäß Fig. 1 hin kein Messsignal 10 abgeben. Durch das Einstellsignal 4 wird ein kleiner Anteil der Markermoleküle 13 in einen messbaren Zustand überführt, was in der rechten Hälfte von Fig. 2 dadurch angedeutet ist, dass dort zwei Markermoleküle 13 mit einem "x" markiert sind. In der umgekehrten Richtung wirkt das Rückführsignal 5, d. h. es überführt die Markermoleküle 13 aus ihrem messbaren Zustand in ihren nicht messbaren Zustand. Alternativ oder zusätzlich kann ein Ausschaltsignal 6 gemäß Fig. 1 eingesetzt werden, dass Markermoleküle 13 in einen permanent nicht messbaren Zustand überführt (nicht abgebildet). Die Überführungsraten aufgrund des Einstellsignals 4 und des Rückführsignals 5 soweit ggf. des Ausschaltsignals 6 bestimmen im Zusammenspiel mit allen weiteren, eventuell vorhandenen und durch andere Signale induzierten oder spontanen Übergangsraten, den Anteil der Markermoleküle 13, die sich in dem messbaren Zustand befinden. Dieser Anteil kann durch die Intensitäten der Signale 4 und 5 so eingestellt werden, dass eine optimale Messkonzentration der Markermoleküle 13 in dem messbaren Zustand vorliegt, um einen bestimmten Messwert auf der Basis von Einzelmolekülereignissen zu bestimmen.

**Fig. 3** skizziert einen anderen Fall des neuen Verfahrens, bei dem die Markermoleküle 13 mit dem Einstellsignal 4 aus ihrem anfänglichen messbaren Zustand (links in Fig. 3) innerhalb des Messbereichs 14 im Wesentlichen in ihren nicht messbaren Zustand (rechts in Fig. 3) überführt werden, so dass nur wenige Markermoleküle 13 in dem messbaren Zustand verbleiben. Mit diesem geringen Anteil der messbaren Markermoleküle 13 wird aber gerade die gewünschte Messkonzentration für die Bestimmung des interessierenden Messwerts auf der Basis von Einzelmolekülereignissen erreicht. Das Rückführsignal 5 überführt die Markermoleküle 13 im Gegenzug zurück in ihren messbaren Zustand. Dabei kann das Rückführsignal 5 überflüssig sein, wenn beispielsweise ein spontaner Übergang der Markermoleküle 13 aus ihrem nicht messbaren Zustand in ihren messbaren Zustand mit relevanter Übergangsrate erfolgt.

**Fig. 4** zeigt für verschiedene aus dem Stand der Technik grundsätzlich bekannte schaltbare Fluoreszenzfarbstoffe deren relative Anzahl in ihrem messbaren, d. h. fluoreszierenden Zustand in Abhängigkeit von der Intensität des Einstellsignals 4 gemäß Fig. 2, das sie in ihren messbaren Zustand überführt. Den Daten gemäß Fig. 4 liegt ein Einstellsignal in Form von UV-Licht der Wellenlänge von 405 nm zugrunde. Das Abfragesignal 3 gemäß Fig. 1 ist in diesem Fall blaues Licht der Wellenlänge 488 nm. Die relative Anzahl an messbaren Markermolekülen wurde mit Hilfe der Fluoreszenzfluktuationsspektroskopie anhand der FIDA-Methode unter Registrieren des Fluoreszenzlichts als Messsignal 10 mit einem Punktdetektor bestimmt.

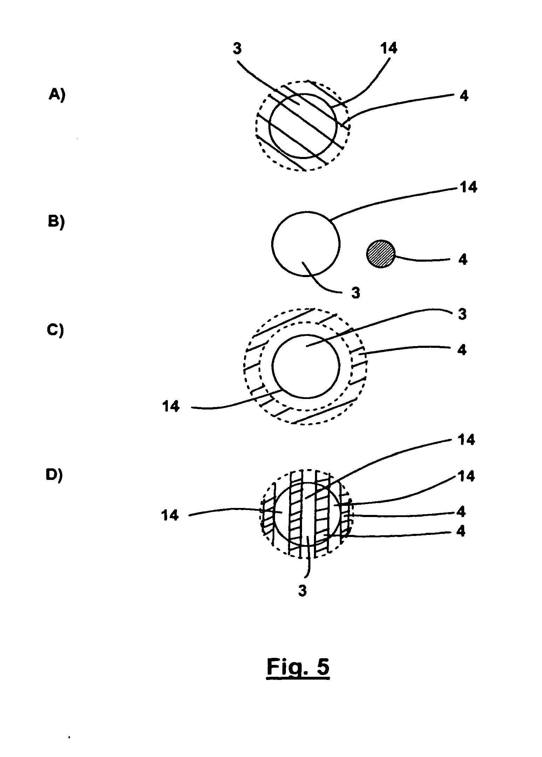

**Fig. 5A** skizziert einen Fall, in dem der von dem Einstellsignal 4 erfasste Bereich den gesamten Messbereich 14, der von dem Abfragesignal 3 erfasst wird, abdeckt und über diesen hinausgeht. Das Einstellsignal 4 bestimmt damit unmittelbar die Messkonzentration der in dem Messbereich 14 in ihrem messbaren Zustand vorliegenden Markermoleküle.

**Fig. 5B** skizziert den Fall, in dem das Einstellsignal 4 neben dem Messbereich 14 aufgebracht wird, in dem das Messsignal mit dem Abfragesignal 3 generiert wird. In diesem Fall hat das Einstellsignal 4 nur einen indirekten, von der Diffusion der Markermoleküle abhängigen Einfluss auf die Messkonzentration der in ihrem messbaren Zustand in dem Messbereich 14 befindlichen Markermoleküle.

**Fig. 5C** skizziert den Fall, dass mit Hilfe eines diffraktiven Elements (einer sogenannten Phasenmaske) in dem Strahl des Einstellsignals 4 ein Ring aus dem Einstellsignal 4 um den Messbereich 14 herumgelegt wird. Vorausgesetzt, die Markermoleküle bewegen sich in geeigneter Weise, zum Beispiel durch Diffusion, kann so die Messung in einem Bereich erfolgen, in dem kein Einstellsignal 4 auf die Probe fällt. Eine Trennung des Abfragesignals 3 bzw. der Generierung des Messsignals von dem Einstellsignal 4 kann auch durch einen zeitlichen Versatz zwischen dem Einstellsignal 4 und dem Abfragesignal 3 bewirkt werden. D. h., die eigentliche Messung erfolgt erst einige Zeit nach der Einstellung der gewünschten Messkonzentration der Markermoleküle in dem Messbereich 14.

In **Fig. 5D** ist eine räumliche Modulation des Einstellsignals 4 skizziert. Hierdurch kann beispielsweise der Bereich des Abfragesignals 3 in mehrere diskrete Messbereiche 14 unterteilt werden oder der Effekt von Diffusion und Kinetik getrennt werden. In Kombination mit einem räumlich auflösenden Detektor oder mehrer Detektoren kann diese Anordnung auch zur gleichzeitigen Messung in mehreren Messbereichen 14 verwendet werden.

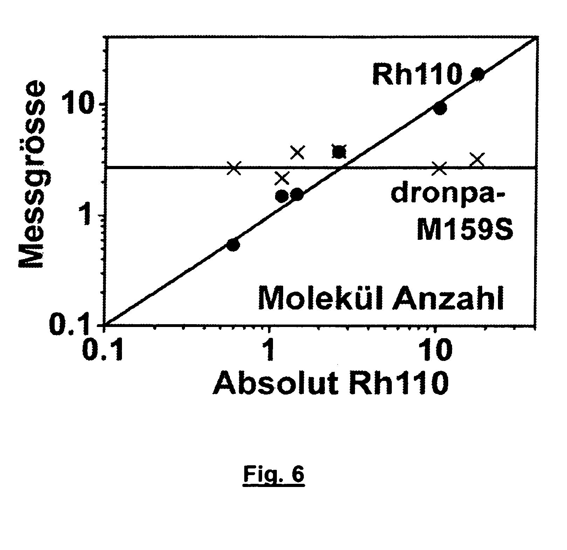

In einem konkreten Beispiel, dessen Ergebnisse in **Fig. 6** skizziert sind, wurde die Konzentration des Markermoleküls Rhodamin110 (Rh110) im Beisein eines großen Überschusses eines anderen Markermoleküls dronpa-M159S, dessen Messsignal z.B. durch Farbfilter nicht von dem des Markermoleküls Rh110 unterschieden werden kann, gemessen. Indem nur ein geringer Teil der absoluten Konzentration der dronpa-Moleküle in ihren messbaren Zustand geschaltet wurde, lag die Messkonzentration der dronpa-Moleküle in der Größenordnung der Konzentration der Rhodamin-Moleküle. So konnte mittels Fluoreszenzfluktuationsanalyse eine Variation der Rhodaminkonzentration bei konstanter viel höherer absoluter dronpa-Konzentration aufgelöst werden. Diese Messung simuliert z. B. die Messbedingungen bei Bindungsereignissen mit niedriger Affinität.

Das erfindungsgemäße Verfahren kann auch zum Beobachten von Protein-Protein-Wechselwirkung verwendet werden, wobei ein Protein mit einem FRET-Donor und ein Protein mit einem FRET-Akzeptor markiert ist. Das Abfragelicht regt den Donor an. Falls eine Bindung stattgefunden hat, fluoresziert aber mit einer gewissen Wahrscheinlichkeit der Akzeptor (nicht der Donor), da aufgrund der Bindung ein Energieübertrag vom Donor auf den Akzeptor stattfinden kann. Die Wahrscheinlichkeit des Energieübertrags ist gleichzeitig ein Maß für die Entfernung und relative Orientierung von Donor und Akzeptor. Indem der Donor mit dem erfindungsgemäßen Verfahren auf eine geeignete Messkonzentration eingeschaltet wird, kann in jedem beugungslimitierten Punkt einer Probe als Messbereich ein Histogramm der Entfernungen aufgestellt werden, indem in jedem solchen Punkt sehr häufig immer genau ein FRET-Paar (oder ein einzelner Donor/Akzeptor) abgefragt wird und dabei entweder seine Lebensdauer oder die relative Fluoreszenz von Akzeptor und Donor bestimmt wird.

### BEZUGSZEICHENLISTE

- 1: Vorrichtung
- 2: Probe
- 3: Abfragesignal
- 4: Einstellsignal
- 5: Rückführsignal
- 6: Ausschaltsignal
- 7: optisches Element
- 8: Objektiv
- 9: Phasenplatte
- 10: Messsignal
- 11: Detektor
- 12: Scaneinrichtung
- 13: Markermolekül
- 14: Messbereich

## Patentansprüche

1. Verfahren zum Bestimmen mindestens eines Messwerts durch eine Methode der Fluktuationsanalyse auf der Basis von Einzeimclekülereignissen von gleichartigen Markermolekülen in einer Probe,
- wobei ein Messsignal (18), das von den Markermolekülen emittiertes Fluoreszenzlicht ist, aus einem definierten Messbereich (14) erfasst wird,
- wobei das Messsignal (10) von einem Kollektiv von Markermolekülen (13) stammt.
- wobei beim Bestimmen des mindestens einen Messwerts das Messsignal (10) von den Markermolekülen (13) unabhängig davon ausgewertet wird, von wo innerhalb des Messbereichs (14) es stammt und/oder weicher Orientierung der Markermoleküle (13) in dem Messbereich (14) es entspricht, so dass der Messwert einen anderen Parameter als die Position oder Orientierung einzelner Markermoleküle betrifft.
- wobei die Markermoleküle einen messbaren Zustand, in dem ein zum Bestimmen des mindestens einen Messwerts benötigtes Messsignal von ihnen erhältlich ist, und einen nicht messbaren Zustand, in dem sie das zum Bestimmen des mindestens einen Messwerts benötigte Messsignal nicht abgeben, aufweisen,
- wobei die Markermoleküle in einer so hohen absoluten Konzentration in der Probe vorliegen, dass der mindestens eine Messwert auf der Basis von Einzelmolekülereignissen der Markermoleküle nicht bestimmbar ist, wenn sich alle Markermoleküle in dem messbaren Zustand befinden,
- wobei mit einem auf die Probe aufgebrachten optischen Einstellsignal eine solche Messkonzentration der Markermoleküle in dem messbaren Zustand eingestellt wird, dass der Messwert innerhalb des definierten Messbereichs auf der Basis von Einzelmolekülereignissen der Markermoleküle bestimmbar ist,
- wobei die Markermoleküle (13) in der Probe (2) beweglich sind, wobei der Messbereich (14) relativ zu der Probe fest liegt, oder der Messbereich (14) relativ zu der Probe (2) bewegt wird,
- wobei der Messbereich (14) auf einen den Messbereich (14) nicht räumlich auflösenden Detektor (11) für das Messsignal (10) abgebildet wird,
- wobei die Markermoleküle (13) mit dem auf die Probe aufgebrachten Einstellsignal (4) entweder
(a) aus ihrem nicht messbaren Zustand in ihren messbaren Zustand überführt werden; oder
(b) aus ihrem messbaren Zustand in ihren nicht messbaren Zustand überführt werden,
- wobei die Markermoleküle (13) aus einer Gruppe von Markermolekülen (13) ausgewählt werden, die aus ihrem nicht messbaren Zustand mit einer Übergangsrate in ihren messbaren Zustand übergehen, .und
- wobei die Messkonzentration mit dem Einstellsignal auf einen Wert eingestellt wird, der mindestens 2 mal so groß ist wie der Kehrwert der Abmessungen des Messbereichs.

2. Verfahren nach Anspruch 1, **dadurch gekennzeichnet, dass** die Messkonzentration anhand des aus dem Messbereich (14) erfassten Messsignals (10) auf einen für das Bestimmen des mindestens einen Messwerts optimalen Konzentrationswert in dem definierten Messbereich (14) eingeregelt und optional fortlaufend nachgeregelt wird.

3. Verfahren nach Anspruch 2, **dadurch gekennzeichnet, dass** die Messkonzentration mittels des Einstellsignals (4) und/oder eines weiteren Signals, mit dem die Markermoleküle (13), entgegen der Hauptrichtung ihrer Überführung mit dem Einstellsignal (4), zurück in ihren anfänglichen Zustand oder in einen weiteren nicht messbaren Zustand überführt werden, eingeregelt wird.

4. Verfahren nach einem der Ansprüche 1 bis 3, **dadurch gekennzeichnet, dass** die Markermoleküle (13) aus einer Untergruppe von Markermolekülen (13) ausgewählt werden, die aus ihrem nicht messbaren in ihren messbaren Zustand (ba) spontan oder (bb) in Folge eines zum Bestimmen des mindestens einen Messwerts eingesetzten Signals übergehen.

5. Verfahren nach einem der Ansprüche 1 bis 4, **dadurch gekennzeichnet, dass** die Messkonzentration auf einen Wert eingestellt wird, der mindestens 5 mal so groß ist wie der Kehrwert der Abmessungen des Messbereichs (14).

6. Verfahren nach einem der Ansprüche 1 bis 5, **dadurch gekennzeichnet, dass** die Markermoleküle (13) mit einem optischen oder thermischen Rückführsignal (5), das sich von dem Einstellsignal (4) unterscheidet, entgegen der Hauptrichtung ihrer Überführung mit dem Einstellsignal (4) zurück in ihren anfänglichen Zustand überführt werden und/oder mit einem optischen oder thermischen Ausschaltsignal (6) aus ihrem messbaren Zustand in einen weiteren, permanent nicht messbaren Zustand überführt werden.

7. Verfahren nach einem der Ansprüche 1 bis 6, **dadurch gekennzeichnet, dass** mindestens zwei Signale aus der Gruppe des Einstellsignals (4), des Rückführsignals (5), des Ausschaltsignals (6) und eines Abfragesignals (3), mit dem die Markermoleküle (13) zur Abgabe des Messsignals (10) angeregt werden, durch dasselbe physikalische Signal bereitgestellt werden.

8. Verfahren nach einem der Ansprüche 1 bis 7, **dadurch gekennzeichnet, dass** mindestens ein Signal aus der Gruppe des Einstellsignal (4), des Rückführsignals (5), des Ausschaltsignals (6) und eines Abfragesignals (3), mit dem die Markermoleküle (13) zur Abgabe des Messsignals (10) angeregt werden, mit einer Modulation über der Zeit auf die Probe (2) aufgebracht wird.

9. Verfahren nach einem der Ansprüche 1 bis 8, **dadurch gekennzeichnet, dass** mindestens ein Signal aus der Gruppe des Einstellsignal (4), des Rückführsignals (5), des Ausschaltsignals (6) und eines Abfragesignals (3), mit dem die Markermoleküle (13) zur Abgabe des Messsignals (10) angeregt werden, mit einer strukturierten räumlichen Verteilung auf die Probe (2) aufgebracht wird.

10. Verfahren nach einem der Ansprüche 1 bis 9, **dadurch gekennzeichnet, dass** das Einstellsignal (4) außerhalb des Messbereichs (14) auf die Probe (2) aufgebracht wird.

11. Verfahren nach einem der Ansprüche 1 bis 10, **dadurch gekennzeichnet, dass** das Einstellsignal (4) mit konstanter Intensität über dem Messbereich (14) auf die Probe (2) aufgebracht wird.

12. Verfahren nach einem der Ansprüche 1 bis 11, **dadurch gekennzeichnet, dass** die Markermoleküle (13) in der Probe (2) in mehreren getrennten Messbereichen (14) parallel gemessen werden.

## Claims

1. Method of determining at least one measurement value by means of a method of fluctuation analysis on the basis of single molecule events of congenerous marker molecules in a sample,
- wherein a measurement signal (10) which is fluorescence light emitted by the marker molecules is recorded from a defined measurement region (14),
- wherein the measurement signal (10) originates from a collective of marker molecules (13),
- wherein, in determining the at least one measurement value, the measurement signal (10) from the marker molecules (13) is evaluated independently of from where within the measurement region (14) it originates and/or to which orientation of the marker molecules (13) in the measurement region (14) it corresponds so that the measurement value relates to another parameter than the position or orientation of individual marker molecules,
- wherein the marker molecules have a measurable state in which a measurement signal needed for determining the at least one measurement value is available from them and a non-measurable state in which they do not provide the measurement signal needed for determining the at least one measurement value,
- wherein the marker molecules are present in the sample at such a high absolute concentration that the at least one measurement value is not determinable on the basis of single molecule events of the marker molecules if all marker molecules are in the measurable state,
- wherein by means of an optical adjustment signal applied to the sample such a measurement concentration of the marker molecules in the measurable state ist adjusted that the measurement value is determinable within the defined measurement region on the basis of single molecule events of the marker molecules,
- wherein the marker molecules (13) are mobile in the sample (2), the measurement region (14) being fixed with regard to the sample, or wherein the measurement region (14) is moved with regard to the sample (2),
- wherein the measurement region (14) is imaged onto a detector (11) for the measurement signal (10), which is not spatially resolving the measurement region (14),
- wherein the marker molecules (13), by means of the adjustment signal (4) applied to the sample, are either
(a) transferred out of their non-measurable state into their measurable state; or
(b) transferred out of their measurable state into their non-measurable state,
- wherein the marker molecules (13) are selected from a group of marker molecules (13) which change at a transfer rate out of their non-measurable state into their measurable state, and
- wherein the measurement concentration, by means of the adjustment signal, is adjusted to a value which is at least twice as high as the reciprocal value of the dimensions of the measurement region.

2. Method of claim 1, **characterised in that**, using the measurement signal (10) recorded from the measurement region (14), the measurement concentration is adjusted and optionally continuously readjusted to a concentration value in the defined measurement region (14), which is optimally suited for determining the measurement value.

3. Method of claim 2, **characterised in that** the measurement concentration is adjusted by means of the adjustment signal (4) and/or a further signal by which the marker molecules (13) are transferred in an opposite direction to the main direction of their transfer by means of the adjustment signal (4) back into their starting state or into a further non-measurable state.

4. Method of any of the claims 1 to 3, **characterised in that** the marker molecules (13) are selected from a sub-group of marker molecules (13) which (ba) spontaneously or (bb) as a result of a signal used for determining the at least one measurement value change out of their non-measurable state into their measurable state.

5. Method of any of the claims 1 to 4, **characterised in that** the measurement concentration is adjusted to a value which is at least five times as high as the reciprocal value of the dimensions of the measurement region (14).

6. Method of any of the claims 1 to 5, **characterised in that** the marker molecules (13), by means of an optical or thermal return signal (5) which differs from the adjustment signal (4), are transferred in an opposite direction to the main direction of their transfer by means of the adjustment signal (4) back into their starting state, and/or, by means of an optical or thermal switch off signal (6), are transferred out of their measurable state into a further permanently non-measurable state.

7. Method of any of the claims 1 to 6, **characterised in that** at least two signals from the group of the adjustment signal (4), the return signal (5), the switch off signal (6) and an interrogation signal (3) by which the marker molecules (13) are excited for providing the measurement signal (10) are provided by the same physical signal.

8. Method of any of the claims 1 to 7, **characterised in that** at least one signal from the group of the adjustment signal (4), the return signal (5), the switch off signal (6) and an interrogation signal (3) by which the marker molecules (13) are excited for providing the measurement signal (10) is applied to the sample (2) with temporal modulation.

9. Method of any of the claims 1 to 8, **characterised in that** at least one signal from the group of the adjustment signal (4), the return signal (5), the switch off signal (6) and an interrogation signal (3) by which the marker molecules (13) are excited for providing the measurement signal (10) is applied to the sample (2) with a structured spatial distribution.

10. Method of any of the claims 1 to 9, **characterised in that** the adjustment signal (4) ist applied to the sample (2) outside the measurement region (14).

11. Method of any of the claims 1 to 10, **characterised in that** the adjustment signal (4) is applied to the sample (2) at a constant intensity over the measurement region (14).

12. Method of any of the claims 1 to 11, **characterised in that** the marker molecules (13) in the sample (2) are simultaneously measured in a plurality of separated measurement regions (14).

## Revendications

1. Procédé pour déterminer au moins une valeur de mesure par la méthode de l'analyse de fluctuation sur la base d'événements moléculaires individuels des marqueurs moléculaires dans un échantillon,
- un signal de mesure (10), qui est une lumière fluorescente émise par les marqueurs moléculaires, étant détecté à partir d'une zone de mesure (14) définie,
- ledit signal de mesure (10) émanant d'un groupe de marqueurs moléculaires (13),
- pendant la détermination de ladite au moins une valeur de mesure, le signal de mesure (10) des marqueurs moléculaires (13) étant analysé indépendamment du lieu duquel il émane à l'intérieur de la zone de mesure (14) et/ou indépendamment de l'orientation des marqueurs moléculaires (13) à laquelle il correspond dans la zone de mesure (14), de telle sorte que la valeur de mesure concerne un paramètre différent de la position et de l'orientation des marqueurs moléculaires individuels,
- les marqueurs moléculaires comportant un état mesurable, dans lequel ils peuvent recevoir un signal de mesure nécessaire pour déterminer ladite au moins une valeur de mesure, et un état mesurable, dans lequel ils ne renvoient pas le signal de mesure nécessaire pour déterminer ladite au moins une valeur de mesure,
- les marqueurs moléculaires étant présents dans l'échantillon dans une concentration absolue si élevée que ladite au moins une valeur de mesure ne peut pas être déterminée sur la base d'événements moléculaires individuels des marqueurs moléculaires, lorsque tous les marqueurs moléculaires sont à l'état mesurable,
- une telle concentration de mesure des marqueurs moléculaires à l'état mesurable étant réglée avec un signal de réglage optique appliqué sur l'échantillon, de telle sorte que la valeur de mesure peut être déterminée à l'intérieur de la zone de mesure définie sur la base d'événements moléculaires individuels des marqueurs moléculaires,
- les marqueurs moléculaires (13) étant mobiles dans l'échantillon (2), la zone de mesure (14) étant fixe par rapport à l'échantillon, ou la zone de mesure (14) étant déplacée par rapport à l'échantillon (2),
- la zone de mesure (14) étant reproduite sur un détecteur (11) du signal de mesure (10), lequel ne disloque pas dans l'espace la zone de mesure (14),
- les marqueurs moléculaires (13) étant transposés avec le signal de réglage (4) appliqué sur l'échantillon
(a) soit à partir de leur état non mesurable vers leur état mesurable,
(b) soit à partir de leur état mesurable vers leur état non mesurable,
- les marqueurs moléculaires (13) étant choisis dans un groupe de marqueurs moléculaires (13), qui passent avec un taux de transfert de leur état non mesurable vers leur état mesurable,
- la concentration de mesure étant réglée avec le signal de réglage à une valeur qui est au moins égale au double de la valeur inverse des mesures de la zone de mesure.

2. Procédé selon la revendication 1, **caractérisé en ce que**, à l'appui du signal de mesure (10) détecté dans la zone de mesure (14), la concentration de mesure est réglée à une valeur de concentration optimale pour la détermination de ladite au moins une valeur de mesure dans la zone de mesure (14) définie et, en option, peut être corrigée en continu.

3. Procédé selon la revendication 2, **caractérisé en ce que** la concentration de mesure est réglée au moyen du signal de réglage (4) et/ou d'un autre signal, par lequel les marqueurs moléculaires (13), contrairement à la direction principale de leur transposition avec le signal de réglage (4), sont ramenés à leur état initial ou dans un autre état non mesurable.

4. Procédé selon l'une quelconque des revendications 1 à 3, **caractérisé en ce que** les marqueurs moléculaires (13) sont choisis dans un sous-groupe de marqueurs moléculaires (13) qui passent de leur état non mesurable vers leur état mesurable soit (ba) spontanément, soit (bb) à la suite d'un signal utilisé pour la détermination de ladite au moins une valeur de mesure.

5. Procédé selon l'une quelconque des revendications 1 à 4, **caractérisé en ce que** la concentration de mesure est réglée à une valeur qui correspond à au moins cinq fois la valeur inverse des mesures de la zone de mesure (14).

6. Procédé selon l'une quelconque des revendications 1 à 5, **caractérisé en ce que** les marqueurs moléculaires (13), par un signal de rappel (5) optique ou thermique se différenciant du signal de réglage (4), sont ramenés à leur état initial à l'encontre de la direction principale de leur transposition par le signal de réglage (4), et/ou, par un signal de désactivation (6) optique ou thermique, sont amenés de leur état mesurable vers un autre état non mesurable en permanence.

7. Procédé selon l'une quelconque des revendications 1 à 6, **caractérisé en ce qu'**au moins deux signaux, émanant du groupe du signal de réglage (4), du signal de rappel (5), du signal de désactivation (6) et d'un signal d'interrogation (3), par lequel les marqueurs moléculaires (13) sont activés pour émettre un signal de mesure (10), sont mis à disposition par le même signal physique.

8. Procédé selon l'une quelconque des revendications 1 à 7, **caractérisé en ce qu'**au moins un signal, émanant du groupe du signal de réglage (4), du signal de rappel (5), du signal de désactivation (6) et d'un signal d'interrogation (3), par lequel les marqueurs moléculaires (13) sont activés pour émettre un signal de mesure (10), est appliqué avec une modulation dans le temps sur l'échantillon (2).

9. Procédé selon l'une quelconque des revendications 1 à 8, **caractérisé en ce qu'**au moins un signal, émanant du groupe du signal de réglage (4), du signal de rappel (5), du signal de désactivation (6) et d'un signal d'interrogation (3), par lequel les marqueurs moléculaires (13) sont activés pour émettre un signal de mesure (10), est appliqué avec une répartition spatiale structurée sur l'échantillon (2).

10. Procédé selon l'une quelconque des revendications 1 à 9, **caractérisé en ce que** le signal de réglage (4) est appliqué sur l'échantillon (2) en dehors de la zone de mesure (14).

11. Procédé selon l'une quelconque des revendications 1 à 10, **caractérisé en ce que** le signal de réglage (4) est appliqué sur l'échantillon (2) avec une intensité constante sur toute la zone de mesure (14).

12. Procédé selon l'une quelconque des revendications 1 à 11, **caractérisé en ce que** les marqueurs moléculaires (13) dans l'échantillon (2) sont mesurés parallèlement dans plusieurs zones de mesure (14) séparées.
